# EUROPÄISCHE PATENTSCHRIFT

(11) **EP 2 075 225 B1**
(45) Veröffentlichungstag und Bekanntmachung des Hinweises auf die Patenterteilung: **07.01.2015**
(21) Anmeldenummer: 08167687.6
(22) Anmeldetag: 28.10.2008
(51) Int. Cl.: C01B 3/38, H01M 8/06

(54) **Reformer, Brennstoffzellensystem und zugehöriges Betriebsverfahren**
Reformer, fuel cell system and process for its operation
Dispositif de reformage, système de piles à combustibles et procédé d'opération du système

(30) Priorität: 08.11.2007 DE 102007053141
(43) Veröffentlichungstag der Anmeldung: 01.07.2009
(73) Patentinhaber: Eberspächer Climate Control Systems GmbH & Co. KG, 73730 Esslingen (DE)
(72) Erfinder: Kaupert, Andreas, 73730 Esslingen (DE)
(74) Vertreter: BRP Renaud & Partner mbB Rechtsanwälte Patentanwälte Steuerberater

(56) Entgegenhaltungen:
- EP-A2- 1 795 499
- DE-A1- 10 217 675
- DE-A1- 10 244 883
- DE-A1-102005 030 474

## Beschreibung

Die vorliegende Erfindung betrifft einen Reformer zum Generieren eines Wasserstoffgas enthaltenden Reformatgases, mit den Merkmalen des Oberbegriffs des Anspruchs 1. Die Erfindung betrifft außerdem ein mit einem derartigen Reformer ausgestattetes Brennstoffzellensystem sowie ein zugehöriges Betriebsverfahren.

Aus der DE 102 44 883 B4 ist eine Heizeinrichtung für ein Fahrzeug bekannt, die einen Reformer zum Generieren eines Wasserstoffgas enthaltenden Reformatgases aus einem Wasserstoff enthaltenden Brennstoff und einem Oxidator enthält. Ferner ist eine an eine Eingangsseite des Reformers angeschlossene Oxidatorleitung zum Zuführen des Oxidators zum Reformer vorgesehen. Des weiteren ist eine an eine Ausgangsseite des Reformers angeschlossene Reformatgasleitung zum Abführen von Reformatgas vom Reformer vorgesehen. Außerdem umfasst die Heizeinrichtung einen in die Reformatgasleitung eingebundenen Nachbrenner zum Umsetzen zumindest eines Teils des Reformatgases mit einem Oxidator. Ferner ist ein Nachbrennerwärmeübertrager vorgesehen, der einerseits stromab des Nachbrenners in die Reformatgasleitung eingebunden ist und der bei der bekannten Heizeinrichtung andererseits in einen Heizkreis zum Beheizen eines Fahrzeuginnenraums oder zum Anwärmen einer Brennkraftmaschine des Fahrzeugs eingebunden ist.

Eine weitere Heizeinrichtung ist aus der DE 102 17 675 A1 bekannt.

Ein weiterer Reformer ist aus der EP 1 795 499 A2 bekannt.

Ein Brennstoffzellensystem mit Reformer ist aus der DE 10 2005 030 474 A1 bekannt.

Die vorliegende Erfindung beschäftigt sich mit dem Problem, für einen Reformer der eingangs genannten Art bzw. für ein damit ausgestattetes Brennstoffzellensystem bzw. für ein zugehöriges Betriebsverfahren eine verbesserte Ausführungsform anzugeben, die sich insbesondere dadurch auszeichnet, dass der Reformer bei niedrigen Temperaturen, also insbesondere während eines Kaltstarts, einen verbesserten Wärmehaushalt aufweist, hochwertigeres Reformatgas erzeugt und eine verkürzte Warmlaufphase besitzt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, mit Hilfe des Nachbrennerwärmeübertragers den dem Reformer zugeführten Oxidator bedarfsabhängig vorzuwärmen. Durch die Aufheizung oder Vorwärmung des dem Reformer zugeführten Oxidators erreicht der Reformer schneller stabile Zustände für die Gemischbildung, insbesondere für die Brennstoffverdampfung, sowie für die partielle Oxidation des Gemischs. Ferner kann der Reformer dadurch rascher seine Betriebstemperatur erreichen. Insbesondere begünstigt der aufgeheizte Oxidator die Verdampfung eines flüssigen Brennstoffs und reduziert dadurch die anderenfalls hierzu erforderliche elektrische Energie. Zu diesem Zweck ist der Nachbrennerwärmeübertrager in einen stromauf des Nachbrennerwärmeübertragers von der Oxidatorleitung abgezweigten Zweig der Oxidatorleitung eingebunden.

Durch die verkürzte Startphase kann der Reformer rascher seine Volllast erreichen und ausreichend Reformatgas generieren. Die Nachverbrennung im Nachbrenner erhöht dabei die Qualität des Reformatgases, was eine Rußbildung im nachfolgenden Pfad reduziert.

Entsprechend einer vorteilhaften Ausführungsform wird der Nachbrenner bevorzugt unterstöchiometrisch betrieben, wodurch gegebenenfalls im Reformatgas noch enthaltene Kohlenwasserstoffe durch partielle Oxidation in Wasserstoffgas und Kohlenmonoxid sowie Wasser umsetzbar sind. Die Qualität des Reformatgases lässt sich dadurch steigern, was eine signifikante Verbesserung hinsichtlich der Vermeidung einer Rußbildung z.B. in einer nachgeordneten Brennstoffzelle beiträgt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

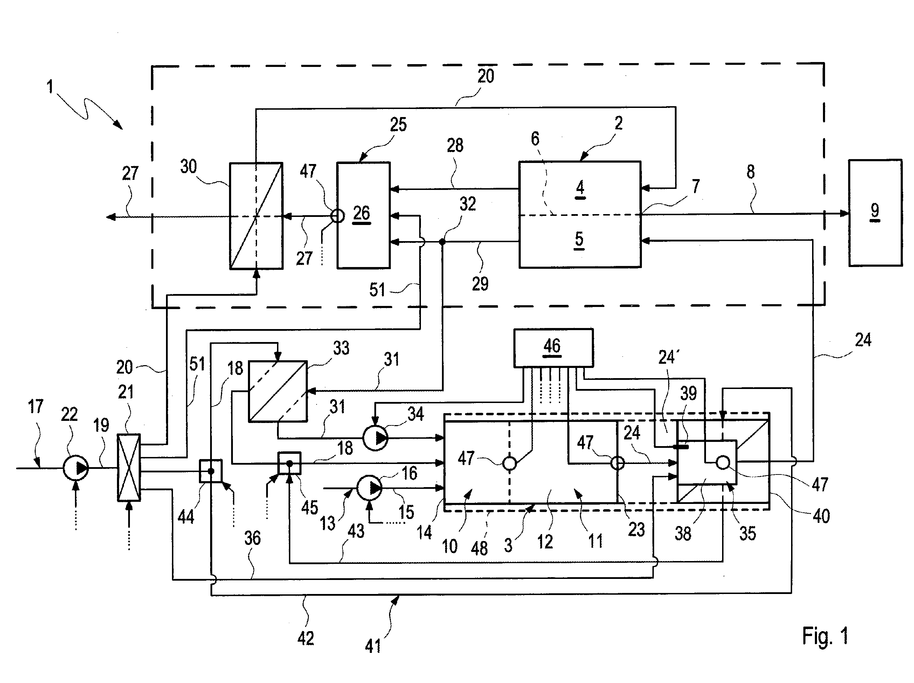

Es zeigen, jeweils schematisch, Fig. 1 uns 2 jeweils eine stark vereinfachte, schaltplanartige Prinzipdarstellung eines Brennstoffzellensystems, bei unterschiedlichen Ausführungsformen.

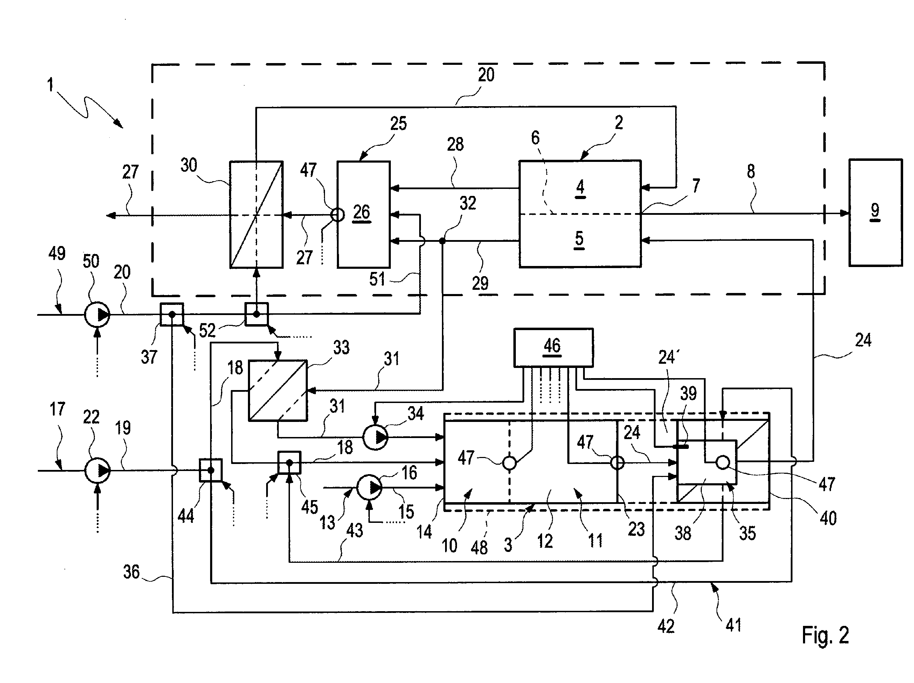

Entsprechend den Fig. 1 und 2 umfasst ein Brennstoffzellensystem 1 zumindest eine Brennstoffzelle 2 sowie wenigstens einen Reformer 3. Die Brennstoffzelle 2 umfasst üblicherweise eine Kathodenseite 4 sowie eine Anodenseite 5, die über ein Elektrolyt 6 voneinander getrennt sind. Im Betrieb setzt die Brennstoffzelle 2 am Elektrolyt 6 ein Wasserstoffgas enthaltendes Anodengas mit Sauerstoffgas enthaltendem Kathodengas, z.B. Luft, um, wobei elektrischer Strom an wenigstens einem elektrischen Anschluss 7 abgreifbar ist. Im Beispiel führt eine elektrische Leitung 8 zu einem elektrischen Verbraucher 9. Das Brennstoffzellensystem 1 kann beispielsweise in einem Kraftfahrzeug angeordnet sein und dort als zusätzliche oder als einzige Stromquelle dienen, um elektrische Verbraucher 9 des Fahrzeugs mit elektrischer Energie zu versorgen.

Der Reformer 3 ist so ausgestaltet, dass er aus einem Wasserstoff enthaltenden Brennstoff, bei dem es sich grundsätzlich um einen beliebigen Kohlenwasserstoff handeln kann, und einem geeigneten Oxidator, z.B. Luft, ein Wasserstoffgas enthaltendes Reformatgas generiert, das innerhalb des Brennstoffzellensystems 1 bevorzugt der Brennstoffzelle 2 als Anodengas zugeführt werden kann. Der Reformer 3 enthält hierzu einen Gemischbildungsabschnitt 10 und einen Reformierungsabschnitt 11. Im Gemischbildungsabschnitt 10 erfolgt die Gemischbildung aus Brennstoff und Oxidator. Sofern es sich beim Brennstoff um einen flüssigen Brennstoff handelt, beispielsweise Benzin, Diesel oder Biokraftstoff, erfolgt im Gemischbildungsabschnitt 10 außerdem eine Verdampfung des Brennstoffs. Hierbei kann der Gemischbildungsabschnitt 10 beispielsweise mit einer kalten Flamme arbeiten. Im Reformierungsabschnitt 11 erfolgt die partielle Oxidation des Gemischs, wodurch die Kohlenwasserstoffe z.B. mit Sauerstoff in Wasserstoffgas, Kohlenmonoxid, Kohlendioxid und Wasser aufgespalten werden. Hierzu enthält der Reformationsabschnitt 11 einen hierfür geeigneten Katalysator 12.

Zur Versorgung des Reformers 3 mit Brennstoff ist eine Brennstoffzuführung 13 vorgesehen, die eine an eine Eingangsseite 14 des Reformers 3 angeschlossene Brennstoffleitung 15 und eine darin angeordnete Fördereinrichtung 16, z.B. eine Pumpe, umfasst. Zur Versorgung des Reformers 3 mit Oxidator, der insbesondere Luft sein kann, ist eine Oxidatorzuführung 17 vorgesehen, die über eine Oxidatorleitung 18 an die Eingangsseite 14 angeschlossen ist. Die gleiche Oxidatorzuführung 17 wird im Beispiel gemäß Fig. 1 auch zur Versorgung der Brennstoffzelle 2 mit Kathodengas verwendet, bei dem es sich bevorzugt um Luft handelt. Hierzu zweigt eine Kathodengasleitung 20 von der Oxidatorleitung 18 ab bzw. zweigen die Oxidatorleitung 18 und die Kathodengasleitung 20 z. B. über eine geeignete Ventileinrichtung 21 von einer gemeinsamen Versorgungsleitung 19 ab. In dieser Versorgungsleitung 19 kann eine Fördereinrichtung 22, z.B. ein Gebläse, angeordnet sein.

Alternativ kann bei der in Fig. 2 gezeigten Ausführungsform zur Versorgung der Brennstoffzelle 2 mit Oxidatorgas eine separate zweite Oxidatorzuführung 49 vorgesehen sein, deren Oxidatorleitung direkt die Kathodengasleitung 20 bildet. Diese zweite Oxidatorzuführung 49 enthält in der Kathodengasleitung 20 eine geeignete Fördereinrichtung 50, z. B. ein Gebläse, wodurch die Versorgung der Brennstoffzelle 2 mit Oxidatorgas unabhängig von der Oxidatorversorgung des Reformers 3 ist. Bei der Ausführungsform gemäß Fig. 2 geht die Versorgungsleitung 19 direkt in die Oxidatorleitung 18 über oder ist mit dieser identisch.

An eine Ausgangsseite 23 des Reformers 3 ist gemäß den Fig. 1 und 2 eine Reformatgasleitung 24 angeschlossen, über die das Reformatgas vom Reformer 3 abführbar ist. In den Beispielen ist die Reformatgasleitung 24 an die Anodenseite 5 der Brennstoffzelle 2 angeschlossen und kann in der Folge auch als Anodengasleitung 24 bezeichnet werden.

Das Brennstoffzellensystem 1 weist hier außerdem einen Restgasbrenner 25 auf, der in einem Brennraum 26 Kathodenabgas und Anodenabgas umsetzt. Bei dieser Verbrennungsreaktion, die mit offener Flamme oder katalytisch erfolgen kann, entsteht Brennerabgas, das über eine Abgasleitung 27 vom Restgasbrenner 25 abgeführt wird. Der Restgasbrenner 26 ist über eine Kathodenabgasleitung 28 an die Kathodenseite 4 der Brennstoffzelle 2 angeschlossen. Ferner ist der Restgasbrenner 25 über eine Anodenabgasleitung 29 an die Anodenseite 5 der Brennstoffzelle 2 angeschlossen. In die Abgasleitung 27 ist im Beispiel ein Wärmeübertrager 30 eingebunden, der außerdem in die Kathodengasleitung 20 eingebunden ist. Auf diese Weise kann die Wärme des Brennerabgases zum Aufheizen des Kathodengases 20 genutzt werden, was die Effektivität der Brennstoffzelle 2 erhöht. In der Abgasleitung 27 kann wenigstens ein weiterer Wärmeübertrager angeordnet sein, beispielsweise um einen Fahrzeuginnenraum zu beheizen und/oder um eine Brennkraftmaschine aufzuwärmen. Des weiteren können in der Abgasleitung 27 Abgasbehandlungseinrichtungen, wie z.B. ein Oxidationskatalysator, angeordnet sein.

An den Restgasbrenner 25 ist eingangsseitig außerdem eine Kühlgasleitung 51 angeschlossen, über die dem Restgasbrenner 25 bedarfsabhängig ein Kühlgas, z.B. Luft, zugeführt werden kann. Insbesondere kann das Kühlgas dem Kathodenabgas zugemischt werden. Bei der Ausführungsform gemäß Fig. 1 zweigt die Kühlgasleitung 51 über die Ventileinrichtung 21 von der Versorgungsleitung 19 ab. Bei der in Fig. 2 gezeigten Ausführungsform zweigt die Kühlgasleitung 51 über ein entsprechendes Steuerventil 52 von der Kathodengasleitung 20 ab.

Bei den hier gezeigten Ausführungsformen der Fig. 1 und 2 ist außerdem eine Rezirkulationsleitung 31 vorgesehen, über die dem Reformer 3 Anodenabgas rückführbar ist. Hierzu ist die Rezirkulationsleitung 31 bei 32 an die Anodenabgasleitung 29 angeschlossen. In der Rezirkulationsleitung 31 ist im Bespiel ein Rezirkulationswärmeübertrager 33 angeordnet, der außerdem in die Oxidatorleitung 18 eingebunden ist. Hierdurch kann eine Aufheizung des zur Versorgung des Reformers 3 dienenden Oxidators realisiert werden. Gleichzeitig kann dadurch eine Abkühlung des rückgeführten Anodenabgases realisiert werden. Es ist klar, dass der Rezirkulationswärmeübertrager 33 zusätzlich oder alternativ auch in die Kathodengasleitung 20 und/oder in die Brennstoffleitung 15 eingebunden sein kann.

In der Rezirkulationsleitung 31 ist außerdem eine Fördereinrichtung 34 angeordnet, bei der es sich beispielsweise um eine Pumpe, um ein Gebläse oder um einen Verdichter oder Kompressor oder dergleichen handeln kann.

Der hier vorgestellte Reformer 3 ist zusätzlich mit einem Nachbrenner 35 ausgestattet, der in die Reformatgasleitung 24 eingebunden ist. Im Nachbrenner 35 können beispielweise im Reformatgas noch enthaltene Kohlenwasserstoffe umgesetzt werden. Ebenfalls kann im Nachbrenner 35 zumindest teilweise eine Umsetzung des Reformatgases erfolgen. In jedem Fall wird hierzu ein Oxidator benötigt, insbesondere Sauerstoff. Dieser Oxidator, der bevorzugt Luft ist, wird dem Nachbrenner 35 über eine zusätzliche Oxidatorleitung 36 zugeführt. Diese Nachbrenneroxidatorleitung 36 zweigt im Beispiel gemäß Fig. 1 über die Ventileinrichtung 21 von der Versorgungsleitung 19 ab. Ebenso ist es grundsätzlich möglich, diese Nachbrenneroxidatorleitung 36 von der Kathodengasleitung 20 oder von der Reformeroxidatorleitung 18 abzuzweigen. Bei dem in Fig. 2 gezeigten Beispiel zweigt die Nachbrenneroxidatorleitung 36 über ein weiteres Steuerventil 37 von der Kathodengasleitung 20 ab. Die Nachbrenneroxidatorleitung 36 ist bei beiden Beispielen an eine Brennkammer 38 des Nachbrenners 35 angeschlossen. Zur Zündung der Nachbrenner-Verbrennungs-reaktion kann eine entsprechende Zündhilfe 39 vorgesehen sein, bei der es sich um eine Glühkerze, einen Glühstift oder eine Zündkerze oder ein beliebiges anderes Zündorgan handeln kann.

Des weiteren ist der hier gezeigte Reformer 3 mit einem Nachbrennerwärmeübertrager 49 ausgestattet. Dieser ist einerseits mit dem Nachbrenner 35 wärmeübertragend gekoppelt und zusätzlich oder alternativ in die Reformatgasleitung 24, und zwar stromab des Nachbrenners 35 und andererseits in die Reformeroxidatorleitung 18, und zwar stromauf des Reformers 3 eingebunden. Zu diesem Zweck weist die Reformeroxidatorleitung 18 einen Wärmeübertragerzweig 41 mit einem zum Wärmeübertrager 40 führenden Vorlauf 42 und einem vom Wärmeübertrager 40 zurückkommenden Rücklauf 43 auf. Der Vorlauf 42 zweigt über eine Vorlaufventileinrichtung 44 vom Hauptstrang der Reformeroxidatorleitung 18 ab. Der Rücklauf 43 ist über eine Rücklaufventileinrichtung 45 an den Hauptstrang der Reformeroxidatorleitung 18 angeschlossen, und zwar stromab der Vorlaufventileinrichtung 44.

Bei der in Fig. 1 gezeigten Ausführungsform zweigt der Vorlauf 42 stromab der Ventileinrichtung 21 von der Reformeroxidatorleitung 18 ab. Im Unterschied dazu ist bei der in Fig. 2 gezeigten Ausführungsform die Vorlaufventileinrichtung 44 in die Versorgungsleitung 19 eingebunden bzw. am Übergang zwischen der Versorgungsleitung 19 und der Oxidatorleitung 18 angeordnet.

Grundsätzlich kann auch eine der Ventileinrichtungen 44 und 45 entfallen; ebenso kann die eine bzw. die jeweilige Ventileinrichtung innerhalb des Vorlaufs 42 oder innerhalb des Rücklaufs 43 angeordnet sein. Über den Strömungswiderstand ergibt sich die gewünschte Strömungsführung auch bei der Verwendung nur einer Ventileinrichtung 44 bzw. 45.

Bemerkenswert ist außerdem, dass bei den hier gezeigten Ausführungsformen der Vorlauf 42 jeweils stromauf des Rezirkulationswärmeübertragers 33 von der Oxidatorleitung 18 bzw. von der Versorgungsleitung 19 abzweigt.

Des weiteren ist hier eine Steuerung 46 vorgesehen, die auf geeignete Weise mit den steuerbaren Komponenten des Brennstoffzellensystems 1, also beispielsweise mit den Fördereinrichtungen 16, 22, 34, 50 und mit den Ventileinrichtung 37, 44, 45, 52 sowie mit der Zündhilfe 39 verbunden ist. Außerdem kann die Steuerung 46 mit diversen Sensoren 47 gekoppelt sein, bei denen es sich beispielsweise um Temperatursensoren oder um Drucksensoren oder dergleichen handeln kann.

Im gezeigten, bevorzugten Beispiel bilden der Nachbrenner 35 und der Nachbrennerwärmeübertrager 40 eine bauliche Einheit. Hierbei umschließt der Nachbrennerwärmeübertrager 40 den Nachbrenner 35 bzw. dessen Brennkammer 38 zumindest teilweise in der Umfangsrichtung. Ferner ist bei der hier gezeigten Ausführungsform ein gemeinsamer Rohrkörper 48 durch eine unterbrochene Linie symbolisch angedeutet. Dieser gemeinsame Rohrkörper 48 dient als gemeinsames Gehäuse für den Nachbrennerwärmeübertrager 40 und den Nachbrenner 35. Ferner bildet dieser Rohrkörper 38 einen Abschnitt der Reformatgasleitung 24, nämlich zumindest den sich zwischen Reformer 3 und Nachbrenner 35 erstreckenden Abschnitt. Besagter Abschnitt ist hier mit 24' bezeichnet. Im Beispiel ist außerdem der Reformer 3 in besagtem Rohrkörper 48 untergebracht. Hierdurch ergibt sich eine besonders kompakte Bauweise für den mit dem Nachbrenner 35 und dem Nachbrennerwärmeübertrager 40 ausgestatteten Reformer 3.

Das hier gezeigte Brennstoffzellensystem 1 bzw. der hier gezeigte Reformer 3 lässt sich zweckmäßig wie folgt betreiben:
Während eines Kaltstarts, bei dem die Komponenten des Brennstoffzellensystems 1 bzw. des Reformers 3 Umgebungstemperatur aufweisen, wird der Reformer 3 zunächst als Brenner gestartet und betrieben, solange bis sein Katalysator 12 die Aktivierungstemperatur erreicht. Dieser Brennerbetrieb des Reformers 3 wird durch Überstöchiometrie erreicht. Anschließend wird in den Reformerbetrieb umgeschaltet, wofür in Unterstöchiometrie übergegangen wird, beispielsweise zu einer Luftzahl von ca. 0,4. Anschließend kann im Nachbrenner 35 Reformatgas, das bereits vom Reformer 3 erzeugt worden ist, zumindest teilweise mit Oxidator umgesetzt werden. Der hierzu benötigte Oxidator wird über die Nachbrenneroxidatorleitung 36 zugeführt. Der hierbei von der Versorgungsleitung 19 (Fig. 1) bzw. von der Kathodengasleitung 20 (Fig. 2) teilweise abgezweigte Oxidator wird von der Brennstoffzelle 2 in diesem Zeitpunkt der Warmlaufphase nur bedingt benötigt. Beispielsweise wird im Restgasbrenner 25 nicht umgesetztes Reformatgas mit Oxidator, also Kathodengas, umgesetzt. Zweckmäßig wird als Oxidator für den Reformer 3 sowie für den Nachbrenner 35 sowie optional als Kathodengas Luft verwendet, wodurch gemäß Fig. 1 grundsätzlich eine gemeinsame Oxidatorzuführung 17 realisierbar ist.

Im Nachbrenner 35 wird durch die Umsetzung des Reformatgases Wärme erzeugt, die zum Aufheizen des Reformers genutzt werden kann. Dies erfolgt hier dadurch, dass die Ventileinrichtungen 44 und 45 so geschaltet werden, dass der Oxidatorstrom nicht direkt durch den Hauptstrang der Reformeroxidatorleitung 18 zum Reformer 3 gelangt, sondern über den Vorlauf 42, über den Nachbrennerwärmeübertrager 40 und über den Rücklauf 43 strömen muss, bevor es über den noch aktiven Teil der Oxidatorleitung 18 zur Eingangsseite 14 des Reformers 3 gelangt. Im Nachbrennerwärmeübertrager 40 erfolgt eine Aufheizung des dem Reformer 3 zugeführten Oxidators. Der erhitzte Oxidator vereinfacht insbesondere die Verdampfung des flüssigen Brennstoffs, vereinfacht die Umsetzung des Brennstoff-Oxidator-Gemischs und erhöht insgesamt das Temperaturniveau des Reformers 3. Vorzugsweise wird bei diesem Warmlaufbetrieb nur ein Teil des Reformatgases umgesetzt, so dass der übrige und insbesondere größere Teil des Reformatgases als Anodengas der Brennstoffzelle 2 zuführbar ist. Hierdurch lässt sich auch eine Aufheizung der Brennstoffzelle 2 realisieren. Da im Nachbrenner 35 insbesondere nur ein Teil des Reformatgases umgesetzt wird, kann zusätzlich bevorzugt während dieser Startphase Anodenabgas, das bei geringer oder fehlender Umsetzung in der Brennstoffzelle 2 einen relativ hohen Anteil an Reformatgas enthält, über die Rezirkulationsleitung 31 ebenfalls dem Reformer 3 zugeführt werden. Auch diese Maßnahme kann zum schnelleren Aufheizen des Reformers 3 genutzt werden. Da zweckmäßig auch nur ein Teil des Anodenabgases rezirkuliert wird, kann im Restgasbrenner 25 vorzugsweise eine Verbrennung des Anodenabgases, das bei fehlender Umsetzung in der Brennstoffzelle 2 dem Anodengas entspricht, durchgeführt werden.

Sobald der Reformer 3 seine Betriebstemperatur erreicht hat, werden die Ventileinrichtungen 44 und 45 so geschaltet, dass der Zweig 41 deaktiviert wird, so dass das Oxidatorgas nunmehr wieder direkt über den Hauptstrang der Reformeroxidatorleitung 18 dem Reformer 3 zuführbar ist.

Für den Normalbetrieb kann der Nachbrenner 35 ebenfalls betrieben werden, um die Qualität des Reformatgases zu steigern. Hierzu ist es insbesondere vorteilhaft, den Nachbrenner 35 unterstöchiometrisch zu betreiben. Durch die verbesserte Qualität des Reformatgases kann die Neigung zur Rußbildung im nachfolgenden Pfad reduziert werden.

Um eine Überhitzung des Nachbrenners 35 bzw. des Nachbrennerwärmeübertragers 40 bzw. der Brennstoffzelle 2 zu vermeiden, kann im Nachbrenner 35 bzw. in der Reformatgasleitung 24 ein geeigneter Temperatursensor 47 angeordnet sein.

## Patentansprüche

1. Reformer zum Generieren eines Wasserstoffgas enthaltenden Reformatgases aus einem Wasserstoff enthaltenden Brennstoff und einem Oxidator, insbesondere für ein Brennstoffzellensystem,
- mit einer an eine Eingangsseite (14) des Reformers (3) angeschlossenen Oxidatorleitung (18) zum Zuführen des Oxidators zum Reformer (3),
- mit einer an eine Ausgangsseite (23) des Reformers (3) angeschlossenen Reformatgasleitung (24) zum Abführen des Reformatgases vom Reformer (3),
- mit einem in die Reformatgasleitung (24) eingebundenen Nachbrenner (35),
- mit einem Nachbrennerwärmeübertrager (40), der einerseits stromab des Nachbrenners (35) in die Reformatgasleitung (24) eingebunden und/oder wärmeübertragend mit dem Nachbrenner (35) gekoppelt ist,
**dadurch gekennzeichnet,**
**dass** der Nachbrennerwärmeübertrager (40) andererseits stromauf des Reformers (3) in einen stromauf des Nachbrennerwärmeübertragers (40) von der Oxidatorleitung (18) abgezweigten Zweig (41) der Oxidatorleitung (18) eingebunden ist.

2. Reformer nach Anspruch 1,
**dadurch gekennzeichnet,**
**dass** der Nachbrenner (35) und der Nachbrennerwärmeübertrager (40) eine bauliche Einheit bilden.

3. Reformer nach Anspruch 1 oder 2,
**dadurch gekennzeichnet,**
**dass** der Nachbrennerwärmeübertrager (40) den Nachbrenner (35) zumindest teilweise umfangsmäßig umschließt.

4. Reformer nach einem der Ansprüche 1 bis 3,
**dadurch gekennzeichnet,**
**dass** der Nachbrennerwärmeübertrager (40) und der Nachbrenner (35) in einem gemeinsamen Rohrkörper (48) angeordnet sind, der einen Abschnitt (24') der Reformatgasleitung (24) bildet.

5. Reformer nach Anspruch 4,
**dadurch gekennzeichnet,**
**dass** auch der Reformer (3) im Rohrkörper (48) angeordnet ist.

6. Reformer nach einem der Ansprüche 1 bis 5,
**dadurch gekennzeichnet,**
**dass** eine Steuerung (46) vorgesehen ist, die mit den Komponenten des Reformers (3) oder eines den Reformer (3) umfassenden Brennstoffzellensystems (1) so zusammenwirkt und die so ausgestaltet ist, dass sie den Reformer (3) oder das Brennstoffzellensystem (1) zum Ausführen des Verfahrens nach einem der Ansprüche 7 bis 10 betreiben kann.

7. Verfahren zum Betreiben eines Reformers (3) nach einem der Ansprüche 1 bis 6, insbesondere eines Brennstoffzellensystems, bei dem während eines Kaltstarts vom Reformer (3) erzeugtes Reformatgas im Nachbrenner (35) zumindest teilweise mit Oxidator umgesetzt wird und die dabei erzeugte Wärme im Nachbrennerwärmeübertrager (40) zumindest teilweise dem zur Versorgung des Reformers (3) bestimmten Oxidator zugeführt wird.

8. Verfahren nach Anspruch 7,
**dadurch gekennzeichnet,**
**dass** die zumindest teilweise Umsetzung des Reformatgases mit Oxidator unterstöchiometrisch durchgeführt wird.

9. Verfahren nach Anspruch 7 oder 8,
**dadurch gekennzeichnet,**
**dass** der zum zumindest teilweisen Umsetzen des Reformatgases verwendete Oxidator einem Oxidatorstrom abgezweigt wird, der zur Versorgung des Reformers (3) oder einer Brennstoffzelle (2) eines den Reformer (3) umfassenden Brennstoffzellensystems (1) dient.

10. Verfahren nach einem der Ansprüche 7 bis 9,
**dadurch gekennzeichnet,**
**dass** ein Nachbrenner (35), in dem die zumindest teilweise Umsetzung des Reformatgases mit Oxidator durchgeführt wird, während des Kaltstarts und/oder während eines Normalbetriebs unterstöchiometrisch betrieben wird.

11. Brennstoffzellensystem, insbesondere in einem Kraftfahrzeug,
- mit wenigstens einem Reformer (3) nach einem der Ansprüche 1 bis 6,
- mit wenigstens einer Brennstoffzelle (2) zum Generieren von elektrischem Strom aus einem durch das Reformatgas gebildeten Anodengas und einem Sauerstoffgas enthaltenden Kathodengas.

## Claims

1. A reformer for generating a hydrogen gas containing reformat gas of a hydrogen containing fuel and an oxidant, in particular for a fuel cell system,
- with an oxidant line (18) connected to an input side (14) of the reformer (3) for feeding the oxidant to the reformer (3),
- with a reformat gas line (24) connected to an output side (23) of the reformer (3) for discharging the reformat gas from the reformer (3),
- with an afterburner (35) incorporated in the reformat gas line (24),
- with an afterburner heat transfer device (40), which on the one hand is incorporated downstream of the afterburner (35) in the reformat gas line (24) and/or coupled to the afterburner (35) in a heat-transferring manner,
**characterized in that** the afterburner heat transfer device (40) is incorporated on the other hand upstream of the reformer (3) in a branch (41) of the oxidant line (18) which is branched off the oxidant line (18) upstream of the afterburner heat transfer device (40).

2. The reformer according to Claim 1, **characterized in that** the afterburner (35) and the afterburner heat transfer device (40) form a structural unit.

3. The reformer according to Claim 1 or 2, **characterized in that** the afterburner heat transfer device (40) at least partially encloses the afterburner (35) in terms of circumference.

4. The reformer according to any one of the Claims 1 to 3, **characterized in that** the afterburner heat transfer device (40) and the afterburner (35) are arranged in a common tubular body (48), which forms a section (24') of the reformat gas line (24).

5. The reformer according to Claim 4, **characterized in that** the reformer (3) is also arranged in the tubular body (48).

6. The reformer according to any one of the Claims 1 to 5, **characterized in that** a control (46) is provided which interacts with the components of the reformer (3) or of a fuel cell system (1) comprising the reformer (3) and which is configured so that it can operate the reformer (3) or the fuel cell system (1) for carrying out the method according to any one of the Claims 7 to 10.

7. A method for operating a reformer (3) according to any one of the Claims 1 to 6, in particular of a fuel cell system, with which during a cold start reformat gas generated by the reformer (3) is at least partially converted with oxidant in the afterburner (35) and the heat thereby generated is supplied in the afterburner heat transfer device (40) at least partially to the oxidant intended for supplying the reformer (3).

8. The method according to Claim 7, **characterized in that** the at least partial conversion of the reformat gas with oxidant is carried out sub-stoichiometrically.

9. The method according to Claim 7 or 8, **characterized in that** the oxidant used for the at least partial conversion of the reformat gas is branched off an oxidant flow, which serves for supplying the reformer (3) or a fuel cell (2) of a fuel cell system (1) comprising the reformer (3).

10. The method according to any one of the Claims 7 to 9, **characterized in that** an afterburner (35), in which the at least partial conversion of the reformat gas with oxidant is carried out, is operated sub-stoichiometrically during the cold start and/or during normal operation.

11. The fuel cell system, in particular in a motor vehicle,
- with at least one reformer (3) according to any one of the Claims 1 to 6,
- with at least one fuel cell (2) for generating electric current from an anode gas formed by the reformat gas and an oxygen gas containing cathode gas.

## Revendications

1. Reformeur pour générer un gaz de reformage contenant du gaz d'hydrogène à partir d'une cellule combustible contenant de l'hydrogène et d'un oxydant, notamment pour un système de cellule combustible,
- comportant une conduite d'oxydant (18) raccordée sur un côté d'entrée (14) du reformeur (3) pour alimenter l'oxydant dans le reformeur (3),
- comportant une conduite de gaz de reformage (24) raccordée sur un côté de sortie (23) du reformeur (3) pour éliminer le gaz de reformage du reformeur (3),
- comportant un dispositif de post-combustion (35) incorporé dans la conduite de gaz de reformage (24),
- comportant un échangeur thermique de dispositif de post-combustion (40), qui est incorporé d'un côté en aval du dispositif de post-combustion (35) dans la conduite de gaz de reformage (24) et/ou est couplé de manière transmettant à la chaleur au dispositif de post-combustion (35),
**caractérisé en ce que** l'échangeur thermique de dispositif de post-combustion (40) est incorporé d'un autre côté en amont du reformeur (3) dans une branche (41) de la conduite d'oxydant (18) déviée de la conduite d'oxydant (18) en amont de l'échangeur thermique de dispositif de post-combustion (40).

2. Reformeur selon la revendication 1, **caractérisé en ce que** le dispositif de post-combustion (35) et l'échangeur thermique de dispositif de post-combustion (40) forment une unité structurelle.

3. Reformeur selon la revendication 1 ou 2, **caractérisé en ce que** l'échangeur thermique de dispositif de post-combustion (40) enveloppe au moins partiellement sur sa circonférence le dispositif de post-combusion (35).

4. Reformeur selon une des revendications 1 à 3, **caractérisé en ce que** l'échangeur thermique de dispositif de post-combustion (40) et le dispositif de post-combustion (35) sont disposés dans un corps tubulaire commun (48), qui forme une portion (24') de la conduite de gaz de reformage (24).

5. Reformeur selon la revendication 4, **caractérisé en ce que** le reformeur (3) est aussi disposé dans le corps tubulaire (48).

6. Reformeur selon une des revendications 1 à 5, **caractérisé en ce que** une unité de commande (46) est prévue, qui coopère avec les composants du reformeur (3) ou d'un système de cellule combustible (1) comprenant le reformeur (3) et est conçue de telle sorte qu'elle puisse faire fonctionner le reformeur (3) ou le système de cellule combustible (1) afin de mettre en oeuvre le procédé selon une des revendications 7 à 10.

7. Procédé de fonctionnement d'un reformeur (3) selon une des revendications 1 à 6, notamment d'un système de cellule combustible, dans lequel pendant un démarrage à froid le gaz de reformage produit par le reformeur (3) dans le dispositif de post-combustion (35) est au moins partiellement converti avec l'oxydant et la chaleur ainsi produite dans l'échangeur thermique de dispositif de post-combustion (40) est introduite au moins partiellement dans l'oxydant prévu pour alimenter le reformeur (3).

8. Procédé selon la revendication 7, **caractérisé en ce que** la conversion au moins partielle du gaz de reformage avec l'oxydant est effectuée de manière sous-stoechiométrique.

9. Procédé selon la revendication 7 ou 8, **caractérisé en ce que** l'oxydant utilisé pour la conversion au moins partielle du gaz de reformage est déviée d'un flux d'oxydant, qui sert à alimenter le reformeur (3) ou une cellule combustible (2) d'un système de cellule combustible (1) comprenant le reformeur (3).

10. Procédé selon une des revendications 7 à 9, **caractérisé en ce que** un dispositif de post-combustion (35), dans lequel la conversion au moins partielle du gaz de reformage avec l'oxydant est effectuée, est exploité de manière sous-stoechiométrique pendant le démarrage à froid et/ou pendant un fonctionnement normal.

11. Système de cellule combustible, notamment dans un véhicule automobile,
- comportant au moins un reformeur (3) selon une des revendications 1 à 6,
- comportant au moins une cellule combustible (2) pour générer un courant électrique à partir d'un gaz d'anode formé à travers le gaz de reformage et d'un gaz de cathode contenant du gaz d'oxygène.
